# EUROPÄISCHE PATENTANMELDUNG

(11) **EP 3 461 326 A1**
(43) Veröffentlichungstag der Anmeldung: **03.04.2019**
(21) Anmeldenummer: 17001606.7
(22) Anmeldetag: 28.09.2017
(51) Int. Cl.: A01G 13/02

(54) **HAGEL- UND SONNENSCHUTZVORRICHTUNG FÜR DEN HOPFENANBAU**

(71) Anmelder: Wimmer, Josef, 84072 Au i.d. Hallertau (DE)
(72) Erfinder: Wimmer, Josef, 84072 Au i.d. Hallertau (DE)
(74) Vertreter: Bierschneider, Walter

(57) **Zusammenfassung**

Zur Verhinderung von Schäden durch Hagelschlag und übermäßige Sonneneinstrahlung werden Schutznetze (12) an zusätzlichen Längsdrahten (11) im Hopfengarten geführt, die nach der Ernte entlang der Längsseile zusammengerafft werden.

## Beschreibung

### BEREICH DER ERFINDUNG

Die Erfindung bezieht sich auf eine Schutzvorrichtung für Hopfengärten und dort speziell auf Netze gegen die Einwirkung von Hagelschlag oder zu intensive Sonneneinstrahlung.

### HINTERGRUND DER ERFINDUNG

Hagelschlag gibt es in Hopfengebieten fast jedes Jahr. Im Mai und Juni bedeutet er Ernteverluste und höheren Arbeitsaufwand. Kurz vor der Ernte fordert er höheren Einsatz für den Pflanzenschutz, um die verletzten Pflanzen vor Pilzbefall zu schützen.
Neben möglichem Totalverlust der Jahresernte sind die Pflanzen nach Hagelschlag meist geschwächt und bringen in den Folgejahren geringeren Ertrag.
Nach jedem größeren Hagelereignis steigen daher die Prämien für entsprechende Versicherungen.

Ein zweites Problem ist die Sonneneinstrahlung: Mit zunehmendem Klimawandel wandern die Vegitationszonen in nördlicher Richtung. Es ist daher damit zu rechnen, dass die traditionellen Hopfenanbaugebiete zunehmendem Hitzestress ausgesetzt sein werden.
Dabei ist bereits heute die Ernte in mäßig warmen Jahren besser, als in Perioden mit intensiver Sonneneinstrahlung.

### AUFGABE DER ERFINDUNG

Es ist daher Aufgabe der Erfindung, eine praktikable Schutzvorrichtung zu finden, die sowohl Hagelschlag als auch zu starke Sonneneinstrahlung in Hopfengärten verhindert.

### STAND DER TECHNIK

Spezielle Schutzvorrichtungen für den Hopfenanbau wurden - undokumentiert - mehrfach versucht, erwiesen sich jedoch im Handling als so kompliziert, dass sich noch keine durchsetzen konnten.

Dagegen gibt es Hagelschutzvorrichtungen für Obstkulturen, die z.B. unter DE12918300A, EP 2875721A1, EP 2625950B1 und EP172841 B1 geschützt sind.
Allerdings reißen die dort zum Hagelschutz verwendete Netze im Obstanbau bei hoher Belastung durch dichten oder länger anhaltende Hagelschlag.

Die dagegen angewandten Techniker der Ableitung in die Traufe oder sich bei Belastung selbst öffnender Schlitze Nach EP 2815640A1 und WO2012072905 etc. haben sich bislang aber nicht bewährt und finden daher kaum Anwendung.
Allerdings sind die Netze bei Obstkulturen vergleichsweise einfach zu erneuern, denn Obstkulturen werden seit Jahrzehnten als niederwüchsige Planzen gezüchtet, um ohne Leitern und mit einfachen Maschinen geerntet werden zu können.

Hopfengerüste sind aber über 7 Meter hoch, die Pflanzen sind einjährig und werden im Herbst kurz über dem Boden abgeschnitten und die umschlingende Hopfenpflanze an den Kletterseilen abgerissen und verarbeitet.
Somit ist reine ganz andere Anbringung von Schutzvorrichtungen erforderlich. Insbesondere ist es angesichts der größeren Höhen und Entfernungen der Hopfenpfähle kaum möglich, diese mit den für Obstkulturen üblichen Rollnetzen kurz vor dem Auftreten von Hagelschlag zu schützen. Auch wäre der Austausch im Falle von Beschädigungen erheblich aufwändiger.

### LÖSUNG

Als Lösung bietet sich an, Schutzvorrichtungen zu verwenden, die zu Beginn der Wachstumsperiode aktiviert werden oder diese so auszuführen, dass sie neben möglichem Hagel auch senkrecht einstrahlendes Sonnenlicht dämpfen.

### ERFINDERISCHE SCHRITTE

Der erste erfinderischer Schritt ist daher, eine Schutzvorrichtung zu schaffen, die zu Beginn der Wachstumsperiode ohne großen Aufwand anzubringen und am Saisonende eben so leicht zusammen zu raffen oder zu entfernen ist.
Dazu werden über die Querseile zwischen den Pfählen weitere Längsseile gespannt, und zwar so, dass ein darauf aufgelegtes Netz periodisch durchhängt und über die ursprünglichen Längssseile (die nicht -wie üblich- als Stacheldrähte ausgeführt sind) zu den Querseilen hin zusammenzuschieben oder zusammenziehbar ist.

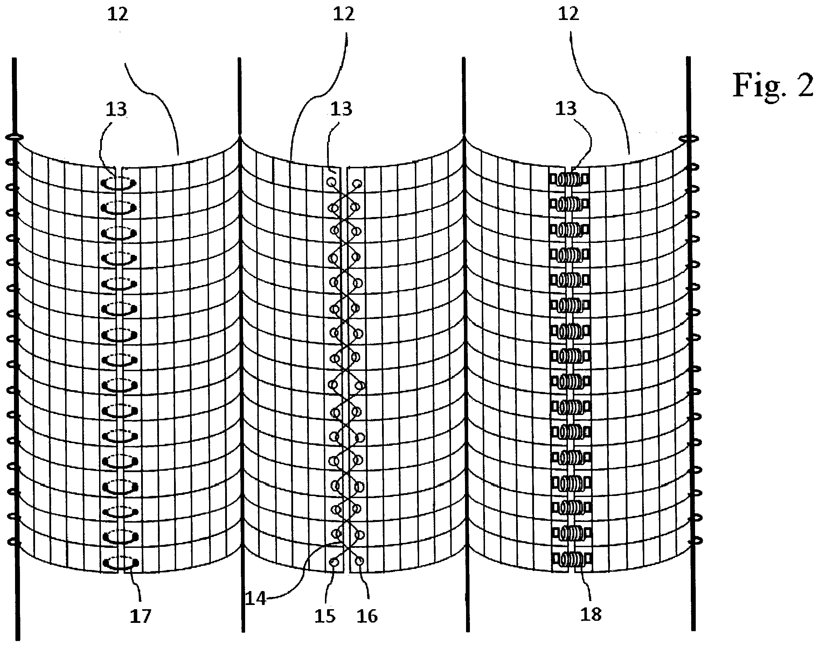

In einem weiteren erfinderischen Schritt sind die Längskanten der Netzelemente elastisch zusammengefügt, so dass sie bei stärkerer Belastung durch Hagelkörner nachgeben und die Last zum Boden hin entlassen, gleichwohl danach aber wieder zur Aufnahme der Fallenergie weiterer Hagelkörner dienen.
Vorzugsweise sind die elastischen Elemente dafür Edelstahl-Spiralfederm oder kurze Gummistropps mit Haken und Ösen, oder sie sind (wie in Fig 2 gezeigt) mit Hilfe von elastischen Leinen Zickzack-förmig zusammengefügt, so dass sie sich bei Überlastung durch größere Ansammlungen von Hagelkörnern selbsttätig öffnen.

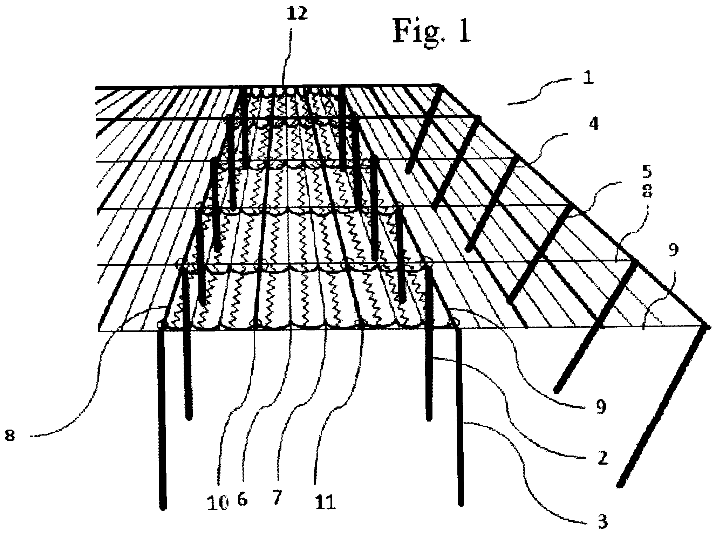

### BESCHREIBUNG ANHAND DER ZEICHNUNGEN FIG.1 UND FIG.2

Fig 1 zeigt den Üblichen Aufbau eines Hopfengartens (1) mit senkrechten Säulen (2, 3) in der Mitte und nach außen abgespannten, und auch nach außen geneigten Säulen (4, 5). Über die Säulen (2-5) verlaufen die Längsseile der Verspannung (6, 7) und über die dazwischen stehenden Säulen die Querseile (8, 9).
   Neu ist, dass weitere Längsseile (10, 11) zwischen die Querseile gespannt sind, um in Streifen angeordnete Schutznetz -Elemente (12) zu tragen, die jeweils zu den Querseilen (8, 9) hin zusammenraffbar sind. Sie sollen nicht straff gespannt sein, sondern leicht durchhängen, um auch größere Mengen an Hagelkörnern aufnehmen zu können.
Fig 2 zeigt als Detail wie die Längskanten (13) dieser Schutznetz -Elemente (12) miteinander durch elastische Elemente verbunden sind.. Dies können Gummiarmierte Zugseile (14) sein, die kreuzweise durch randständige Netzöffnungen (15, 16) geschlungen sind, es können aber auch einzelne Gummistropps (17, 18) oder Edelstahl-Zugfedern (19,20) als verbindende Elemente Verwendung finden.
   Diese sollen sich bei hoher Belastung des Netzes dehnen, um Hagel-Ansammlungen periodisch hindurchfallen zu lassen.
   In jedem Fall ist die Verbindung etwas weniger fest auszulegen, als die sonstige Belastbarkeit des Netzes, um hier für den Extremfall eine Sollbruchstelle zu schaffen.

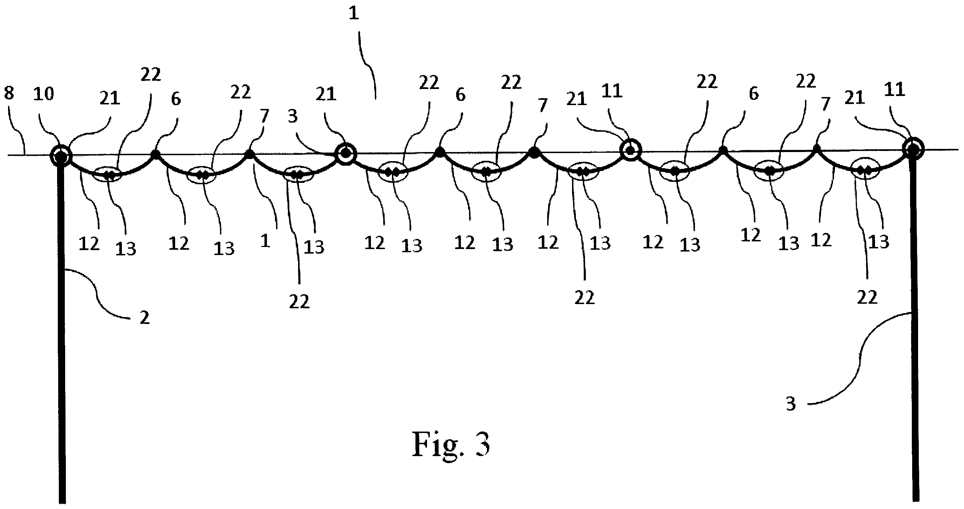

Fig. 3 zeigt im Querschnitt durch einen Hopfengarten (1) mit den senkrechten Säulen (2,3), den darüber verlaufenden zusätzlichen Längsseilen (10,11) und einem Querseil (8).
   An den zusätzlich eingezogenen Längsseilen (10, 11) sind die Streifen der Schutznetze (12) mit Ringen (21) befestigt, die Schutznetze liegen durchhängend auf den vorhandenen Längsseilen (6,7) der Verspannung und sind an ihren Längskanten (13) durch elastische Elemente (22) miteinander verbunden.

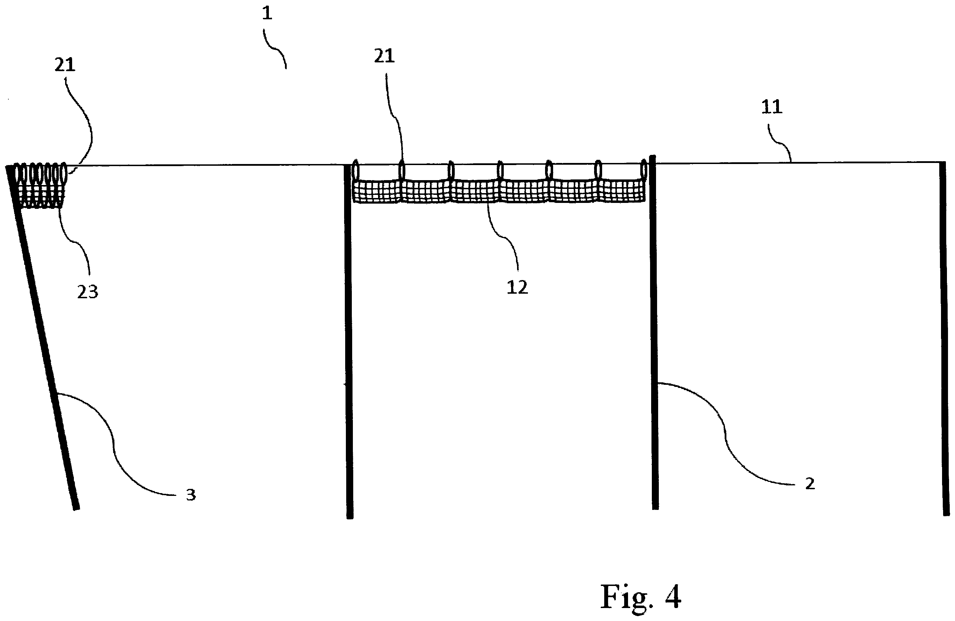

Fig. 4 Zeigt einen Hopfengarten im Längsschnitt mit den Säulen (2, 3) und den Netzen (12, 13), die mit Ösen (23) an den Längsseilen (11) mit Reitösen (21) verschiebbar sind und somit ausgespannt (12) und zusammengerafft (23) werden können.
   Dies kann mit Zugleinen erfolgen (wegen Übersichtlichkeit nicht dargestellt), aber bei jährlich nur 2 Betätigungen auf einem Hubwagen stehend, auch händisch ausgeführt werden.

## Patentansprüche

1. Hagel- und Sonnenschutzvorrichtung für den Hopfenanbau, **dadurch gekennzeichnet, dass** Schutznetze (12) auf zusätzlichen Längsdrähten (11) zwischen Querseilen (8, 9) von Hopfengarten leicht durchhängend aufliegen.

2. Hagel- und Sonnenschutzvorrichtung für den Hopfenanbau nach Anspruch 1, **dadurch gekennzeichnet, dass** diese Netze an den zusätzlichen Längsdrähten (11) an Reitösen o.Ä. zusammenziehbar oder zusammenschiebbar sind.

3. Hagel- und Sonnenschutzvorrichtung für den Hopfenanbau nach Anspruch 1 und 2, **dadurch gekennzeichnet, dass** jeweils mehrere Netzelemente an ihren aneinander stoßenden Aussenkanten (13) elastisch miteinander verbunden sind.

4. Hagel- und Sonnenschutzvorrichtung für den Hopfenanbau nach Anspruch 3, **dadurch gekennzeichnet, dass** die Elastizität durch verbindende Edelstahlfedern bewirkt ist.

5. Hagel- und Sonnenschutzvorrichtung für den Hopfenanbau nach Anspruch 4, **dadurch gekennzeichnet, dass** die Federlemente mit Haken und Ösen austauschbar befestigt sind.

6. Hagel- und Sonnenschutzvorrichtung für den Hopfenanbau nach Anspruch 3, **dadurch gekennzeichnet, dass** die Elastizität durch zwischen die Netzelemente gefädelte Elastomerstränge (14) bewirkt ist.

7. Hagel- und Sonnenschutzvorrichtung für den Hopfenanbau nach Anspruch 5, **dadurch gekennzeichnet, dass** die Elastomerstränge aus umwirkten Gummibändem bestehen.
